# EUROPÄISCHE PATENTSCHRIFT

(11) **EP 1 485 598 B1**
(45) Veröffentlichungstag und Bekanntmachung des Hinweises auf die Patenterteilung: **26.12.2007**
(21) Anmeldenummer: 02774347.5
(22) Anmeldetag: 12.09.2002
(51) Int. Cl.: F02D 41/22

(54) **VERFAHREN UND VORRICHTUNG ZUR ÜBERWACHUNG EINES MOMENTS EINER ANTRIEBSEINHEIT EINES FAHRZEUGS**
METHOD AND DEVICE FOR MONITORING A TORQUE OF A DRIVE UNIT OF A VEHICLE
PROCEDE ET DISPOSITIF DE CONTROLE DU COUPLE D'UNE UNITE D'ENTRAINEMENT D'UN VEHICULE

(30) Priorität: 12.03.2002 DE 10210684
(43) Veröffentlichungstag der Anmeldung: 15.12.2004
(73) Patentinhaber: ROBERT BOSCH GMBH, 70442 Stuttgart (DE)
(72) Erfinder: KELLER, Stefan, 71735 Eberdingen (DE); BAUER, Torsten, 66424 Homburg/Saar (DE)
(86) Internationale Anmeldenummer: PCT/DE2002/003409
(87) Internationale Veröffentlichungsnummer: WO 2003/076785

(56) Entgegenhaltungen:
- DE-A- 19 536 038
- DE-A- 19 729 100
- DE-A- 19 742 083
- DE-A- 19 836 845
- DE-C- 10 034 871

## Beschreibung

### Stand der Technik

Die Erfindung geht von einem Verfahren und einer Vorrichtung zur Überwachung eines Moments einer Antriebseinheit eines Fahrzeugs nach der Gattung der unabhängigen Ansprüche aus. Es ist bereits bekannt, ein Moment einer Antriebseinheit eines Fahrzeugs zu überwachen. Bei dieser Momentenüberwachung wird ein zulässiges Istmoment, das sich im wesentlichen aus einer Motordrehzahl und einem Fahrpedalwinkel ergibt, mit einem aus motorischen Größen berechneten Istmoment verglichen. Diese motorischen Größen sind der Zündwinkel, die Motordrehzahl und eine Information über die Last der Antriebseinheit. In Betriebszuständen, in denen der Fahrer des Fahrzeugs über eine längere Zeit ein im wesentlichen konstantes Moment von der Antriebseinheit fordert, also bei getretener, aber im wesentlichen konstanter Fahrpedalstellung, ist der Fahrer auf eine plötzliche Momentenänderung nicht eingestellt. Die Überwachung solcher Betriebszustände ist insofern schwierig, weil toleranzbedingt eine Differenz zwischen dem zulässigen Moment und dem zu überwachenden Moment vorliegt, die nicht in allen Fahrzeugen gleich ist. Aufgabe der Erfindung ist es daher, die Überwachung solcher Betriebszustände zu verbessern.

### Vorteile der Erfindung

Das erfindungsgemäße Verfahren und die erfindungsgemäße Vorrichtung zur Überwachung eines Moments einer Antriebseinheit eines Fahrzeugs mit den Merkmalen der unabhängigen Ansprüche haben demgegenüber den Vorteil, dass das zu überwachende Moment mit einem zulässigen Moment verglichen wird, dass das zulässige Moment dem zu überwachenden Moment nachgeregelt wird, dass ein Fehler detektiert wird, wenn das zu überwachende Moment stärker als ein erster vorgegebener Wert vom zulässigen Moment abweicht, und dass der Fehler nur in dem Fall detektiert wird, in dem eine Stellung eines Bedienelementes, insbesondere eine Fahrpedalstellung, mindestens seit einer ersten vorgegebenen Zeit innerhalb eines vorgegebenen Toleranzbereiches liegt. Auf diese Weise wird bei im wesentlichen konstanter Stellung des Bedienelementes der Abstand zwischen dem zulässigen Moment und dem zu überwachenden Moment angepaßt. Damit wird die Überwachung von statischen Betriebszuständen, bei denen der Fahrer des Fahrzeugs keine Änderung des zu überwachenden Moments erwartet, erleichtert. Die Einleitung einer entsprechenden Fehlerreaktion ist somit bereits frühzeitig möglich.

Durch die in den Unteransprüchen aufgeführten Maßnahmen sind vorteilhafte Weiterbildungen und Verbesserungen des im unabhängigen Verfahrensanspruch angegebenen Verfahrens möglich.

Besonders vorteilhaft ist es, dass der Fehler detektiert wird, wenn sich die Abweichung innerhalb einer zweiten vorgegebenen Zeit ergibt. Auf diese Weise wird verhindert, dass die Abweichung durch die Nachregelung des zulässigen Momentes reduziert wird, bevor ein Fehler erkannt werden kann.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer erfindungsgemäßen Vorrichtung und Figur 2 einen Ablaufplan des erfindungsgemäßen Verfahrens. Figur 3 zeigt einen Ablaufplan für den Ablauf der Erkennung einer im wesentlichen konstanten Stellung eines Bedienelementes.

### Beschreibung des Ausführungsbeispiels

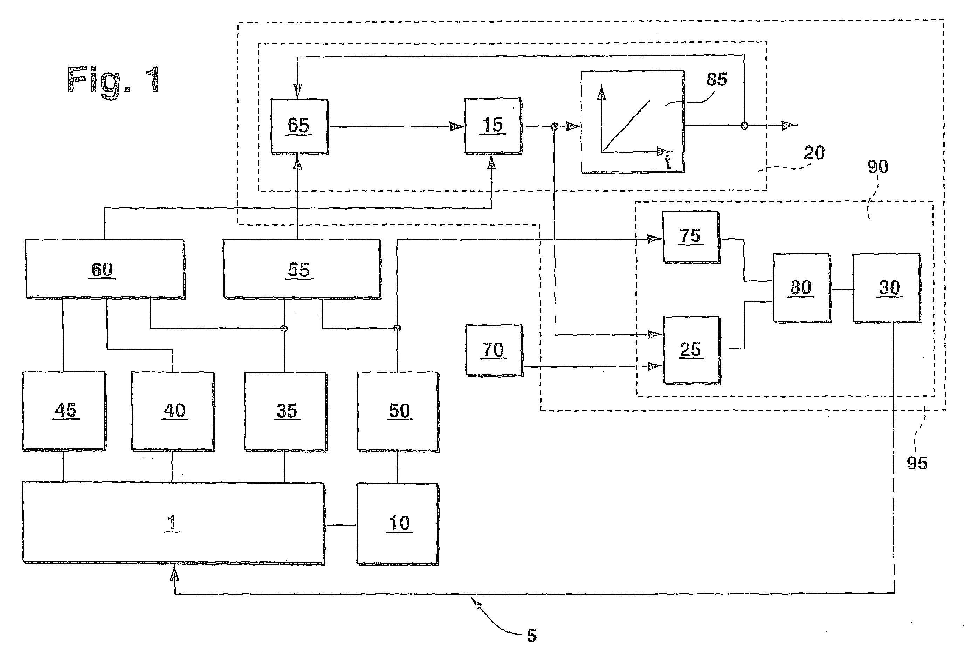

In Figur 1 kennzeichnet 5 ein Fahrzeug, von dem die zur Beschreibung der Erfindung wesentlichen Teile in Figur 1 in Form eines Blockschaltbildes dargestellt sind. So umfaßt das Fahrzeug 5 eine Antriebseinheit 1, beispielsweise eine Brennkraftmaschine. Mit der Antriebseinheit 1 ist ein Bedienelement 10 verbunden, das im folgenden beispielhaft als Fahrpedal ausgebildet sein soll. Weiterhin sind Mittel 35 zur Erfassung einer Motordrehzahl der Antriebseinheit 1 vorgesehen. Ferner sind Mittel 40 zur Erfassung einer von der Antriebseinheit 1 anzutreibenden Last vorgesehen. Bei der Last kann es sich neben dem eigentlichen Antrieb des Fahrzeugs über die Antriebsräder um Nebenaggregate, wie beispielsweise Klimaanlage, Autoradio, elektrisches Schiebedach oder dergleichen handeln, die ebenfalls von der Antriebseinheit 1 angetrieben werden.

Ferner sind Mittel 45 zur Erfassung eines Zündwinkels für den Fall vorgesehen, dass es sich bei der Antriebseinheit 1 um eine Brennkraftmaschine handelt, wie im folgenden beispielhaft angenommen werden soll. Über den Zündwinkel läßt sich ein Zündwinkelwirkungsgrad der Brennkraftmaschine 1 bestimmen. Dies kann ebenfalls durch die Mittel 45 erfolgen.

Ferner sind Mittel 50 zur Erfassung der Stellung des Fahrpedals 10 vorgesehen. Die Mittel 50 stehen mit dem Fahrpedal 10 in Wirkverbindung, und die Mittel 35, 40 und 45 stehen jeweils mit der Brennkraftmaschine 1 in Wirkverbindung. Die Mittel 35, 40 und 45 sind außerdem jeweils mit Mitteln 60 zur Ermittlung eines zu überwachenden Moments verbunden. Bei dem zu überwachenden Moment kann es sich beispielsweise um das von der Brennkraftmaschine 1 abgegebene Moment handeln. Die Mittel 35 und 50 sind mit Mitteln 55 zur Ermittlung eines zulässigen Moments der Brennkraftmaschine 1 verbunden. Bei dem zulässigen Moment kann es sich beispielsweise ebenfalls um das von der Brennkraftmaschine 1 abgegebene Moment handeln, wobei das zulässige Moment in Abhängigkeit der Stellung des Fahrpedals 10 und der Motordrehzahl ermittelt wird. Das zu überwachende Moment hingegen wird durch die Mittel 60 aus der Motordrehzahl, der Last und/oder dem Zündwinkel der Brennkraftmaschine 1 insbesondere mittels eines Kennlinienfeldes ermittelt. Prinzipiell sollte das zu überwachende Moment mit dem zulässigen Moment übereinstimmen. In der Regel tritt aber toleranzbedingt und von Fahrzeug zu Fahrzeug unterschiedlich eine Differenz zwischen dem zu überwachenden Moment und dem zulässigen Moment auf.

Die Mittel 55 sind mit Korrekturmitteln 65 verbunden, so dass das ermittelte zulässige Moment den Korrekturmitteln 65 zugeführt ist. Die Mittel 60 sind mit Mitteln 15 zum Vergleichen verbunden, so dass das ermittelte zu überwachende Moment den Mitteln 15 zugeführt ist. Die Mittel 15 und die Korrekturmittel 65 sind Bestandteile von Mitteln 20 zur Regelung, die außerdem einen Integralregler 85 umfassen. Den Korrekturmitteln 65 ist außerdem ein Korrekturwert zugeführt. Die Korrekturmittel 65 korrigieren das zulässige Moment um den zugeführten Korrekturwert im Sinne einer Nachregelung an das zu überwachende Moment. Daher wird das von den Korrekturmitteln 65 erzeugte korrigierte zulässige Moment den Mitteln 15 zugeführt. Die Mittel 15 vergleichen das korrigierte zulässige Moment mit dem zu überwachenden Moment, indem sie beispielsweise die Differenz aus dem korrigierten zulässigen Moment und dem zu überwachenden Moment bilden und den Differenzwert dem Integralregler 85 zuführen. Der Integralregler 85 ermittelt aus dem Differenzwert den Korrekturwert, der den Korrekturmitteln 65 zugeführt wird und an einem Ausgang der Mittel 20 zur Verfügung gestellt wird. Ziel der Mittel 20 ist es, den Differenzwert zwischen dem korrigierten zulässigen Moment und dem zu überwachenden Moment gegen Null zu regeln. Der Differenzwert wird nun außerdem ersten Mitteln 25 zur Prüfung zugeführt. Diesen ersten Prüfungsmitteln 25 ist außerdem ein erster vorgegebener Wert aus einem Schwellwertspeicher 70 zugeführt. Liegt der Differenzwert betragsmäßig oberhalb des ersten vorgegebenen Wertes, so wird ein Ausgang der ersten Prüfungsmittel 25 gesetzt. Ferner sind zweite Prüfungsmittel 75 vorgesehen, die mit den Mitteln 50 verbunden sind und denen somit die ermittelte Stellung des Fahrpedals 10 zugeführt ist. Die zweiten Prüfungsmittel 25 prüfen dabei, ob die Stellung des Fahrpedals 10 mindestens seit einer ersten vorgegebenen Zeit innerhalb eines vorgegebenen Toleranzbereiches liegt. Ist dies der Fall, so wird der Ausgang der zweiten Prüfungsmittel 75 ebenfalls gesetzt. Andernfalls ist der Ausgang der zweiten Prüfungsmittel 75 nicht gesetzt. Für den Fall, dass der von den Mitteln 15 abgegebenen Differenzwert kleiner oder gleich dem ersten vorgegebenen Wert ist, ist der Ausgang der ersten Prüfungsmittel 25 ebenfalls ungesetzt. Der Ausgang der ersten Prüfungsmittel 25 und der Ausgang der zweiten Prüfungsmittel 75 ist jeweils auf einen Eingang eines UND-Gatters 80 geführt, dessen Ausgang mit Mitteln 30 zur Detektion verbunden ist. Dabei wird der Ausgang des UND-Gatters 80 nur gesetzt, wenn seine beiden Eingänge, also der Ausgang der ersten Prüfungsmittel 25 und der Ausgang der zweiten Prüfungsmittel 75, gesetzt sind. Die Mittel 30 zur Detektion detektieren einen Fehlerzustand, wenn der Ausgang des UND-Gatters 80 gesetzt ist. Die Mittel 30 zur Detektion sind außerdem mit der Antriebseinheit 1 verbunden und leiten eine Fehlerreaktion bei der Antriebseinheit 1 ein, wenn ein Fehlerzustand detektiert wurde. Die Mittel 30, das UND-Gatter 80, die ersten Prüfungsmittel 25 und die zweiten Prüfungsmittel 75 bilden eine Auswerteeinheit 90, die zusammen mit den Mitteln 20 zur Regelung die erfindungsgemäße Vorrichtung 95 bildet.

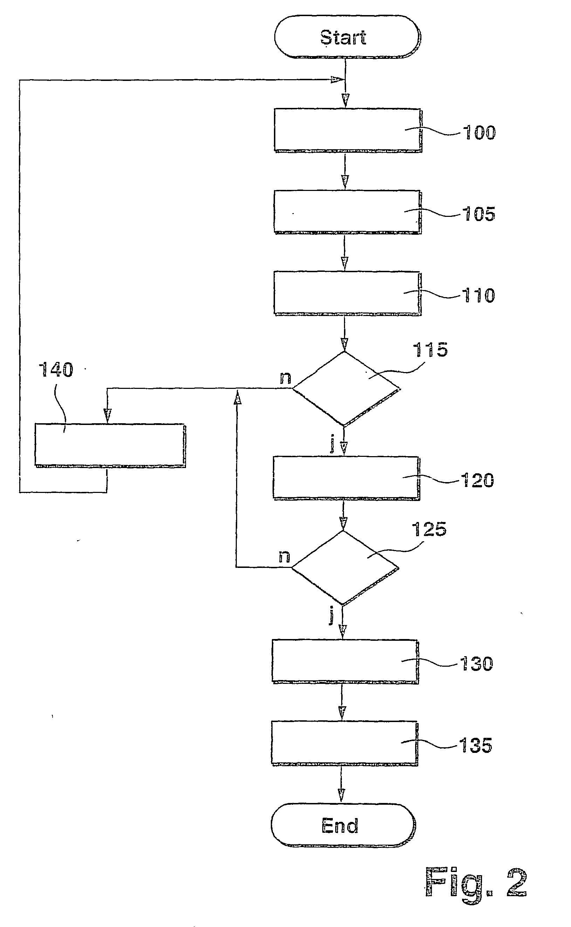

Das erfindungsgemäße Verfahren wird nun anhand des Ablaufplans von Figur 2 erläutert. Im Start des Programms wird der Korrekturwert auf Null gesetzt. Anschließend wird zu einem Programmpunkt 100 verzweigt. Bei Programmpunkt 100 wird das zulässige Moment durch den Korrekturwert, beispielsweise mittels einer Differenzbildung, durch die Korrekturmittel 65 korrigiert. Anschließend wird zu einem Programmpunkt 105 verzweigt. Bei Programmpunkt 105 vergleichen die Mittel 15 das korrigierte zulässige Moment mit dem zu überwachenden Moment durch Bildung des Differenzwertes. Anschließend wird zu einem Programmpunkt 110 verzweigt.

Bei Programmpunkt 110 vergleichen die ersten Prüfungsmittel 25 den Differenzwert mit dem ersten vorgegebenen Wert. Anschließend wird zu einem Programmpunkt 115 verzweigt.

Bei Programmpunkt 115 prüfen die ersten Prüfungsmittel 25, ob der Differenzwert größer als der erste vorgegebene Wert ist. Ist dies der Fall, so wird zu einem Programmpunkt 120 verzweigt, andernfalls wird zu einem Programmpunkt 140 verzweigt. Bei Programmpunkt 120 wird der Ausgang der ersten Prüfungsmittel 25 gesetzt. Anschließend wird zu einem Programmpunkt 125 verzweigt.

Bei Programmpunkt 125 prüfen die zweiten Prüfungsmittel 75, ob die Stellung des Fahrpedals mindestens seit der ersten vorgegebenen Zeit innerhalb des vorgegebenen Toleranzbereiches liegt. Ist dies der Fall, so wird zu einem Programmpunkt 130 verzweigt, andernfalls wird zu Programmpunkt 140 verzweigt.

Bei Programmpunkt 130 wird der Ausgang der zweiten Prüfungsmittel 75 gesetzt und in den Mitteln 30 ein Fehlerzustand detektiert. Anschließend wird zu einem Programmpunkt 135 verzweigt.

Bei Programmpunkt 135 veranlassen die Mittel 30 bei der Brennkraftmaschine 1 eine Fehlerreaktion. Anschließend wird das Programm verlassen. Bei Programmpunkt 140 werden die Ausgänge der ersten Prüfungsmittel 25 und der zweiten Prüfungsmittel 75 zurückgesetzt und durch den Integralregler 85 aus dem bei Programmpunkt 105 ermittelten Differenzwert ein neuer Korrekturwert für die Korrekturmittel 65 im Sinne einer Nachregelung des zulässigen Moments an das zu überwachende Moment ermittelt und zu Programmpunkt 100 zurück verzweigt.

Bei im wesentlichen konstanter Stellung des Fahrpedals 10 existiert wie beschrieben eine Differenz zwischen dem zulässigen Moment und dem zu überwachenden Moment. Durch die Mittel 20 zur Regelung wird das zulässige Moment um den Korrekturwert so lange korrigiert, bis der Differenzwert aus dem korrigierten zulässigen Moment und dem zu überwachenden Moment Null wird. Das zulässige Moment ergibt sich wie beschrieben im wesentlichen aus der Stellung des Fahrpedals 10 und der Motordrehzahl und ist somit bei konstanter Stellung des Fahrpedals 10 ebenfalls konstant. Steigt nun das zu überwachende Moment unzulässig hoch an, so wird der Differenzwert im Ausgang der Mittel 15 negativ.

Überschreitet der Betrag des Differenzwertes den ersten vorgegebenen Wert, so detektieren die Mittel 30 einen Fehlerzustand. Vorteilhaft ist es dabei, wenn die Fehlerdetektion durch die Mittel 30 innerhalb einer zweiten vorgegebenen Zeit nach Ermittlung des Differenzwertes erfolgt. Die zweite vorgegebene Zeit kann beispielsweise dadurch realisiert werden, dass dem Integralregler 85 ein Zeitverzögerungsglied vorgeschaltet ist, das die Bildung des Korrekturwerts durch den Integralregler 85 um die zweite vorgegebene Zeit verzögert. Die zweite vorgegebene Zeit kann dabei so gewählt sein, dass sie mindestens der Laufzeit entspricht, die von der Bildung des Differenzwertes durch die Mittel 15 bis zum Setzen oder Zurücksetzen am Ausgang des UND-Gatters 80 und der damit verknüpften eventuellen Detektion eines Fehlerzustandes durch die Mittel 30 erforderlich ist. Auf diese Weise wird verhindert, dass die Mittel 20 den Differenzwert auf Null regeln, bevor es zu einer Fehlerdetektion durch die Mittel 30 kommen kann und eine Fehlerdetektion somit verhindert werden würde.

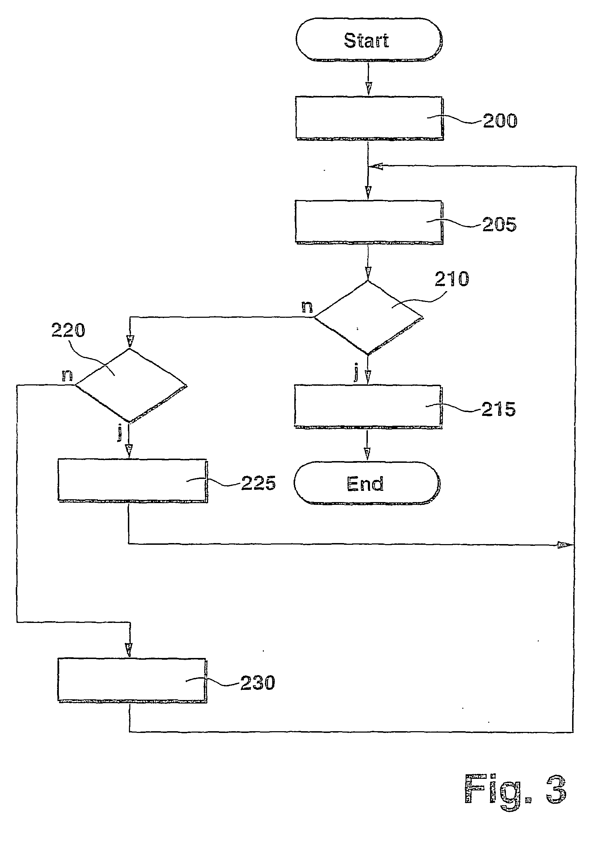

Wie beschrieben, ist eine Detektion eines Fehlerzustandes nur für den Fall vorgesehen, dass eine im wesentlichen konstante Stellung des Fahrpedals 10 vorliegt. Deshalb ist die Erkennung einer solchen konstanten Stellung des Fahrpedals 10 durch die zweiten Prüfungsmittel 75 wichtig. Diese Erkennung kann beispielsweise wie anhand des Ablaufplans nach Figur 3 dargestellt erfolgen.

Nach dem Start des Programms wird eine von den Mitteln 50 zuletzt ermittelte Stellung wped_alt des Fahrpedals 10 in einem in Figur 1 nicht dargestellten Speicher zwischengespeichert und eine Laufvariable n auf Null gesetzt. Anschließend wird zu einem Programmpunkt 205 verzweigt. Bei Programmpunkt 205 ermitteln die Mittel 50 eine aktuelle Stellung wped des Fahrpedals 10 und inkrementieren die Laufvariable n. Anschließend wird zu einem Programmpunkt 210 verzweigt. Bei Programmpunkt 210 prüfen die zweiten Prüfungsmittel 75, ob der Betrag der Differenz aus der zuletzt gültigen Stellung wped_alt und der aktuellen Stellung wped des Fahpedals 10 größer als ein vorgegebener Schwellwert ist, der einen Toleranzbereich für die Stellung des Fahrpedals 10 bildet. Ist dies der Fall, liegt also die Stellung des Fahrpedals 10 außerhalb dieses vorgegebenen Toleranzbereichs, so wird zu einem Programmpunkt 215 verzweigt, andernfalls wird zu einem Programmpunkt 220 verzweigt. Bei Programmpunkt 215 wird die zuletzt gültige Stellung wped_alt auf die aktuelle Stellung wped des Fahrpedals 10 gesetzt und die Laufvariable n auf Null zurückgesetzt. Anschließend wird das Programm verlassen und, sofern die Brennkraftmaschine 1 nicht zwischenzeitlich abgeschaltet wurde, mit dem neuen Wert für die zuletzt gültige Stellung wped_alt erneut durchlaufen.

Bei Programmpunkt 220 prüfen die zweiten Prüfungsmittel 75, in die der aktuelle Wert der Laufvariablen n beispielsweise zwischengespeichert sein kann, ob n größer als ein Grenzwert ist, der eine erste vorgegebene Zeit seit dem Zurücksetzen der Laufvariable n repräsentiert. Ist dies der Fall, so wird zu einem Programmpunkt 225 verzweigt, andernfalls wird zu einem Programmpunkt 230 verzweigt. Bei Programmpunkt 225 wird der Ausgang der zweiten Prüfungsmittel 75 gesetzt. Anschließend wird zu Programmpunkt 205 zurück verzweigt.

Bei Programmpunkt 230 wird der Ausgang der zweiten Prüfungsmittel 75 zurückgesetzt. Anschließend wird zu Programmpunkt 205 zurück verzweigt. Auch bei Programmpunkt 215 wird der Ausgang der zweiten Prüfungsmittel 75 zurückgesetzt.

Die Überwachung des von der Brennkraftmaschine 1 abgegebenen Moments wird vorteilhaft nur außerhalb eines Leerlaufzustandes der Brennkraftmaschine 1 durchgeführt, da im Leerlauf von Seiten einer Leerlaufregelung der Brennkraftmaschine 1 beliebige Momente gefordert werden können.

Handelt es sich bei dem zu überwachenden Moment, wie im obigen Beispiel ausgeführt, um das von der Brennkraftmaschine 1 abgegebene Moment, also ein Istmoment, so kann bei Detektion des Fehlerzustandes durch die Mittel 30 als Fehlerreaktion ein erstes Sollmoment reduziert werden, dem das Istmoment nachgeführt wird. Das erste Sollmoment wäre in diesem Beispiel das von der Brennkraftmaschine 1 abzugebende Moment, das beispielsweise in bekannter Weise in Abhängigkeit der Stellung des Fahrpedals 10 und der Momentenanforderung weiterer Nebenaggregate oder zusätzlicher Verbraucher, wie beispielsweise Klimaanlage, elektrisches Schiebedach, Autoradio oder dergleichen, ermittelt werden kann. Ist der von den ersten Prüfungsmitteln 25 geprüfte Differenzwert aus dem zu überwachenden Moment und dem korrigierten zulässigen Moment größer als ein zweiter vorgegebener Wert, der wiederum größer als der erste vorgegebene Wert ist, so kann als Fehlerreaktion auch eine Abschaltung der Kraftstoffzufuhr, eine sogenannte Sicherheitskraftstoffabschaltung also, bei der Brennkraftmaschine 1 eingeleitet werden.

Für den Fall, in dem das zu überwachende Moment ein zweites Sollmoment ist, bei dem es sich beispielsweise ebenfalls um das von der Brennkraftmaschine 1 abzugebende Moment handeln kann und das daher dem ersten Sollmoment entspricht, kann bei Detektion des Fehlerzustandes durch die Mittel 30 auch eine Begrenzung des zweiten Sollmomentes eingeleitet werden.

Das vorbeschriebene Ausführungsbeispiel wurde anhand einer als Brennkraftmaschine ausgebildeten Antriebseinheit 1 beschrieben. Die Erfindung ist jedoch nicht auf die Verwendung einer Brennkraftmaschine für die Antriebseinheit 1 beschränkt, sondern für beliebige Antriebseinheiten anwendbar, wobei jeweils geeignete Meßgrößen der Antriebseinheit 1 zur Bestimmung des zu überwachenden Moments ermittelt und geeignete Meßvorrichtungen vorgesehen sein sollten.

## Patentansprüche

1. Verfahren zur Überwachung eines Moments einer Antriebseinheit (1) eines Fahrzeugs (5), **dadurch gekennzeichnet, dass** das zu überwachende Moment mit einem zulässigen Moment verglichen wird, dass das zulässige Moment dem zu überwachenden Moment nachgeregelt wird, dass ein Fehler detektiert wird, wenn das zu überwachende Moment stärker als ein erster vorgegebener Wert vom zulässigen Moment abweicht, und dass der Fehler nur in dem Fall detektiert wird, in dem eine Stellung eines Bedienelementes (10), insbesondere eine Fahrpedalstellung, mindestens seit einer ersten vorgegebenen Zeit innerhalb eines vorgegebenen Toleranzbereiches liegt.

2. Verfahren nach Anspruch 1, **dadurch gekennzeichnet, dass** der Fehler detektiert wird, wenn sich die Abweichung innerhalb einer zweiten vorgegebenen Zeit ergibt.

3. Verfahren nach Anspruch 1 oder 2, **dadurch gekennzeichnet, dass** für den Fall, in dem das zu überwachende Moment ein Istmoment ist, bei Detektion des Fehlers ein erstes Sollmoment reduziert wird, dem das Istmoment nachgeführt wird.

4. Verfahren nach Anspruch 1, 2 oder 3, **dadurch gekennzeichnet, dass** für den Fall, in dem das zu überwachende Moment ein Istmoment ist, bei Detektion des Fehlers, insbesondere wenn das zu überwachende Moment stärker als ein zweiter vorgegebener Wert vom zulässigen Moment abweicht und der zweite vorgegebene Wert größer als der erste vorgegebene Wert ist, eine Kraftstoffzufuhr abgeschaltet wird.

5. Verfahren nach einem der vorherigen Ansprüche, **dadurch gekennzeichnet, dass** für den Fall, in dem das zu überwachende Moment ein zweites Sollmoment ist, bei Detektion des Fehlers das zweite Sollmoment begrenzt wird.

6. Verfahren nach einem der vorherigen Ansprüche, **dadurch gekennzeichnet, dass** das zu überwachende Moment in Abhängigkeit eines Zündwinkels, einer Motordrehzahl und/oder einer Information über die Last der Antriebseinheit (1) ermittelt wird.

7. Verfahren nach einem der vorherigen Ansprüche, **dadurch gekennzeichnet, dass** das zulässige Moment in Abhängigkeit einer Motordrehzahl der Antriebseinheit (1) und der Stellung des Bedienelementes (10), insbesondere der Fahrpedalstellung, ermittelt wird.

8. Verfahren nach einem der vorherigen Ansprüche, **dadurch gekennzeichnet, dass** der Fehler nur außerhalb eines Leerlaufzustandes der Antriebseinheit (1) detektiert wird.

9. Vorrichtung (95) zur Überwachung eines Moments einer Antriebseinheit (1) eines Fahrzeugs (5), **dadurch gekennzeichnet, dass** Mittel (15) zum Vergleich des zu überwachenden Moments mit einem zulässigen Moment vorgesehen sind, dass Mittel (20) zur Regelung vorgesehen sind, die das zulässige Moment dem zu überwachenden Moment nachregeln, dass erste Mittel (25) zur Prüfung vorgesehen sind, die prüfen, ob das zu überwachende Moment stärker als ein erster vorgegebener Wert vom zulässigen Moment abweicht, dass Mittel (30) zur Detektion eines Fehlers vorgesehen sind, die einen Fehler detektieren, wenn die ersten Mittel (25) zur Prüfung eine über den ersten vorgegebenen Wert hinausgehende Abweichung feststellen, dass zweite Mittel (75) zur Prüfung vorgesehen sind, die prüfen, ob eine Stellung eines Bedienelementes (10), insbesondere eine Fahrpedalstellung, mindestens seit einer ersten vorgegebenen Zeit innerhalb eines vorgegebenen Toleranzbereiches liegt, und dass die Mittel (30) den Fehler nur in diesem Fall detektieren.

## Claims

1. Method for monitoring a torque of a drive unit (1) of a vehicle (5), **characterized in that** the torque to be monitored is compared with a permissible torque, **in that** the permissible torque is adjusted according to the torque to be monitored, **in that** a fault is detected if the torque to be monitored differs from the permissible torque by more than a first predefineable value, and **in that** the fault is detected only if a position of an operator control element (10), in particular an accelerator pedal position, is within a predefined tolerance range and has been at least since a first predefined time.

2. Method according to Claim 1, **characterized in that** the fault is detected if the difference occurs within a second, predefined time.

3. Method according to Claim 1 or 2, **characterized in that** if the torque to be monitored is an actual torque, a first set point torque in accordance with which the actual torque is adjusted is reduced when the error is detected.

4. Method according to Claims 1, 2 or 3, **characterized in that** if the torque to be monitored is an actual torque, a fuel supply is switched off when the fault is detected, in particular if the torque to be monitored differs from the permissible torque by more than a second predefined value and the second predefined value is higher than the first predefined value.

5. Method according to one of the preceding claims, **characterized in that** if the torque which is to be monitored is a second set point torque, the second set point torque is limited when the fault is detected.

6. Method according to one of the preceding claims, **characterized in that** the torque to be monitored is determined as a function of an ignition angle, of an engine speed and/or of information relating to the load of the drive unit (1).

7. Method according to one of the preceding claims, **characterized in that** the permissible torque is obtained as a function of an engine speed of the drive unit (1) and the position of the operator control element (10), in particular the position of the accelerator pedal.

8. Method according to one of the preceding claims, **characterized in that** the fault is detected only outside an idling state of the drive unit (1).

9. Device (95) for monitoring a torque of a drive unit (1) of a vehicle (5), **characterized in that** means (15) are provided for comparing the torque which is to be monitored with a permissible torque, **in that** adjustment means (20) are provided which adjust the permissible torque in accordance with the torque to be monitored, **in that** first test means (25) are provided which test whether the torque to be monitored differs from the permissible torque by more than a first predefined value, **in that** means (30) are provided for detecting a fault, which means (30) detect a fault if the first test means (25) identify a difference which exceeds the first predefined value, **in that** second test means (75) are provided which test whether a position of an operator control element (10), in particular an accelerator pedal position, is within a predefined tolerance range and has been at least since a first predefined time, and that only in this case do the means (30) detect the fault.

## Revendications

1. Procédé de contrôle du couple d'unité d'entraînement 1 d'un véhicule 5,
**caractérisé en ce que**
l'on compare le couple à contrôler à un couple autorisé,
on asservit le couple à surveiller sur le couple autorisé,
on détecte un défaut si le couple à surveiller diffère du couple autorisé d'une valeur supérieure à une première valeur prédéfinie, et
on détecte le défaut seulement au cas où une position d'un élément de commande 10 notamment de la pédale d'accélérateur se trouve au moins depuis une première durée prédéfinie dans une plage de tolérance prédéfinie.

2. Procédé selon la revendication 1,
**caractérisé en ce qu'**
on détecte le défaut si la déviation se produit dans une seconde durée prédéfinie.

3. Procédé selon l'une quelconque des revendications 1 ou 2,
**caractérisé en ce qu'**
au cas où le couple à surveiller est un couple réel, à la détection du défaut, on réduit un premier couple de consigne sur lequel on asservit le couple réel.

4. Procédé selon l'une quelconque des revendications 1, 2ou 3,
**caractérisé en ce qu'**
au cas où le couple à surveiller est un couple réel, à la détection du défaut, notamment si le couple à surveiller dépasse d'une seconde valeur prédéfinie le couple autorisé, et si la seconde valeur prédéfinie est supérieure à la première valeur prédéfinie, on coupe l'alimentation en carburant.

5. Procédé selon l'une quelconque des revendications précédentes,
**caractérisé en ce qu'**
au cas où le couple à surveiller est un second couple de consigne, lors de la détection du défaut, on limite le second couple de consigne.

6. Procédé selon l'une quelconque des revendications précédentes,
**caractérisé en ce que**
le couple à contrôler se détermine en fonction d'un angle d'allumage, d'une vitesse de rotation du moteur et/ou d'une information concernant la charge de l'unité d'entraînement 1.

7. Procédé selon l'une quelconque des revendications précédentes,
**caractérisé en ce qu'**
on détermine le couple autorisé en fonction de la vitesse de rotation du moteur de l'unité d'entraînement 1 et de la position de l'élément de commande 10, notamment de la position de la pédale d'accélérateur.

8. Procédé selon l'une quelconque des revendications précédentes,
**caractérisé en ce qu'**
on détecte le défaut seulement en dehors du mode de ralenti de l'unité d'entraînement 1.

9. Dispositif 95 pour surveiller le couple de l'unité d'entraînement 1 d'un véhicule 5,
**caractérisé par**
des moyens 15 pour comparer le couple à surveiller à un couple autorisé,
des moyens 20 pour réguler qui asservissent le couple à surveiller sur le couple autorisé,
des premiers moyens 25 pour contrôler et vérifier si le couple à surveiller dépasse d'une première valeur prédéterminée le couple autorisé,
des moyens 30 pour détecter un défaut, ces moyens détectant un défaut si les premiers moyens 25 de contrôle constatent une déviation dépassant une première valeur prédéfinie,
des seconds moyens 75 pour contrôler si une position d'un élément de commande 10 notamment une position de pédale d'accélérateur se trouve, depuis au moins une première durée prédéterminée, dans une plage de tolérance prédéterminée et des moyens 30 qui détectent le défaut seulement dans ce cas.
